# EUROPÄISCHE PATENTANMELDUNG

(11) **EP 2 955 451 A2**
(43) Veröffentlichungstag der Anmeldung: **16.12.2015**
(21) Anmeldenummer: 15164764.1
(22) Anmeldetag: 23.04.2015
(51) Int. Cl.: F24D 3/08, F24D 19/10, G05D 23/19

(54) **VERFAHREN ZUM BETRIEB EINES STEUERGERÄTS SOWIE STEUERGERÄT UND HEIZUNGSSYSTEM MIT SOLCH EINEM STEUERGERÄT**

(30) Priorität: 05.06.2014 DE 102014210814
(71) Anmelder: ROBERT BOSCH GMBH, 70442 Stuttgart (DE)
(72) Erfinder: Wuest, Harald, 35469 Allendorf (DE)

(57) **Zusammenfassung**

Die Erfindung betrifft ein Verfahren zum Betrieb eines Steuergeräts und eine Steuerung eines Heizungssystems, wobei eine vordefinierte Wärmemenge mittels eines Wärmeträgermediums aus einem Wärmespeicher entnommen und in einen Heizkreislauf gefördert wird, wobei eine Temperatur des in den Heizkreislauf geförderten Wärmeträgermediums über eine Zeit erfasst wird, wobei eine benötigte Heizleistung eines Heizungssystems in Abhängigkeit der Temperatur ermittelt wird, wobei der Wärmeerzeuger in Abhängigkeit der ermittelten Heizleistung gesteuert wird.

## Beschreibung

Die Erfindung betrifft ein Verfahren gemäß Patentanspruch 1, ein Steuergerät gemäß Patentanspruch 8 und ein Heizungssystem gemäß Patentanspruch 9.

### Stand der Technik

Es sind Heizungssysteme mit einem Trinkwasserspeicher zur Speicherung von erwärmtem Trinkwasser, einem Heizkreislauf zur Erwärmung von Räumen eines Gebäudes und einem Ölbrenner bekannt, wobei der Ölbrenner separat den Trinkwasserspeicher und separat den Heizkreislauf erwärmt.

Es ist Aufgabe der Erfindung, ein verbessertes Verfahren zum Betrieb eines Steuergeräts, ein verbessertes Steuergerät und ein verbessertes Heizungssystem bereitzustellen.

### Offenbarung der Erfindung

Diese Aufgabe wird mittels eines Verfahrens gemäß Patentanspruch 1 gelöst. Die Aufgabe wird aber auch durch ein verbessertes Steuergerät gemäß Patentanspruch 8 gelöst. Vorteilhafte Ausführungsformen sind in den abhängigen Ansprüchen angegeben.

Erfindungsgemäß wurde erkannt, dass ein verbessertes Verfahren zum Steuern eines Heizungssystems bzw. ein verbessertes Verfahren zur Steuerung eines Steuergeräts eines Heizungssystems dadurch bereitgestellt werden kann, dass eine vordefinierte Wärmemenge mittels eines Wärmeträgermediums aus einem Wärmespeicher entnommen und in den Heizkreislauf des Heizungssystems gefördert wird, wobei eine Temperatur des in den Heizkreislauf geförderten Wärmeträgermediums über eine Zeit erfasst wird, wobei eine benötigte Heizleistung des Heizungssystems in Abhängigkeit der Temperatur ermittelt wird, wobei der Wärmeerzeuger in Abhängigkeit der ermittelten Heizleistung gesteuert wird.

Dadurch kann ein Start-Stopp-Betrieb des Wärmeerzeugers vermieden werden, sodass ein Stromverbrauch zur Durchführung des Startbetriebs reduziert wird.

In einer weiteren Ausführungsform wird aus der erfassten Temperatur eine Temperaturänderung des Wärmeträgermediums über die Zeit ermittelt, wobei auf Grundlage der Temperaturänderung des Wärmeträgermediums und eines vordefinierten ersten Parameters ein Volumenstrom des Wärmeträgermediums aus dem Wärmeerzeuger in den Heizkreislauf ermittelt wird, wobei der ermittelte Volumenstrom mit einem vordefinierten Volumenstrom in einem Vergleich verglichen wird, wobei das Ergebnis des Vergleichs bei der Ermittlung der Heizleistung berücksichtigt wird.

In einer weiteren Ausführungsform weist der erste Parameter einen ersten vordefinierten Schwellenwert und einen vordefinierten Kennwert auf. Die Temperaturänderung wird mit dem ersten Schwellenwert verglichen. Bei Überschreiten des ersten Schwellenwerts durch die Temperaturänderung wird ein Beginn eines Zeitintervalls erfasst. Nach Überschreiten des ersten Schwellenwerts durch die Temperaturänderung wird durch ein Unterschreiten des ersten Schwellenwerts ein Ende des Zeitintervalls ermittelt. In Abhängigkeit des Kennwerts und des Zeitintervalls wird der Volumenstrom ermittelt.

In einer weiteren Ausführungsform wird zur Förderung des Wärmeträgermediums mittels einer Ladepumpe aus dem Wärmespeicher in den Wärmeerzeuger die Ladepumpe in Abhängigkeit der vordefinierten Menge zeitlich begrenzt und vorzugsweise in zeitlich regelmäßigem Abstand aktiviert.

In einer weiteren Ausführungsform wird das Wärmeträgermedium auch aus dem Wärmeerzeuger in den Heizkreislauf gefördert, wobei die Temperatur des aus dem Wärmeerzeuger in den Heizkreislauf geförderten Wärmeträgermediums erfasst wird. Zusätzlich oder alternativ ist auch denkbar, dass das Wärmeträgermedium aus dem Heizkreislauf in den Wärmeerzeuger gefördert wird, wobei die Temperatur des aus dem Heizkreislauf in den Wärmeerzeuger geförderten Wärmeträgermediums erfasst wird.

In einer weiteren Ausführungsform wird eine Minimaltemperatur und eine Maximaltemperatur des aus dem Heizkreislauf in den Wärmeerzeuger geförderten Wärmeträgermediums ermittelt, wobei aus der minimalen Temperatur und der maximalen Temperatur eine Temperaturdifferenz ermittelt wird, wobei auf Grundlage der Temperaturdifferenz und eines zweiten Parameters die Heizleistung ermittelt wird.

In einer weiteren Ausführungsform weist der zweite Parameter einen zweiten Schwellenwert auf, wobei die Temperaturdifferenz mit dem zweiten Schwellenwert in einem weiteren Vergleich verglichen wird, wobei der Wärmeerzeuger in Abhängigkeit des Ergebnisses des weiteren Vergleichs gesteuert wird.

Die Aufgabe wird aber auch durch ein Steuergerät für ein Heizungssystem zur Durchführung eines oben beschriebenen Verfahrens gemäß Patentanspruch 8 gelöst.

Das Steuergerät weist eine Schnittstelle und eine Steuereinrichtung auf. Die Schnittstelle ist mit der Steuereinrichtung verbunden. Die Schnittstelle ist mit wenigstens einem Temperatursensor und einem Wärmeerzeuger verbindbar, wobei die Schnittstelle ausgebildet ist, ein mit einer Temperatur eines Wärmeträgermediums für einen Heizkreislauf korrelierendes Temperatursignal des Temperatursensors zu erfassen und der Steuereinrichtung zur Verfügung zu stellen. Die Steuereinrichtung ist ausgebildet, ein Steuersignal zur Steuerung einer Heizleistung des Wärmeerzeugers an der Schnittstelle auf Grundlage der erfassten Temperatur zur Verfügung zu stellen.

Die Aufgabe wird aber auch durch ein Heizungssystem gemäß Patentanspruch 9 gelöst.

Erfindungsgemäß wurde erkannt, dass ein verbessertes Heizungssystem zur Erwärmung wenigstens eines Raums eines Gebäudes dadurch bereitgestellt werden kann, dass das Heizungssystem einen Wärmeerzeuger und ein Steuergerät, das wie oben beschrieben ausgebildet ist, umfasst. Der Wärmeerzeuger weist einen Anschluss zur fluidischen Verbindung des Wärmeerzeugers mit einem Heizkreislauf, eine Heizeinrichtung zur Erwärmung eines Wärmeträgermediums und einen Temperatursensor auf. Die Heizeinrichtung ist mit dem Anschluss fluidisch verbunden. Der Wärmeerzeuger ist zumindest teilweise mit einem Wärmeträgermedium füllbar. Der Temperatursensor und die Heizeinrichtung sind mit der Schnittstelle des Steuergeräts verbunden. Der Temperatursensor ist zwischen dem Anschluss und der Heizeinrichtung angeordnet und ausgebildet, eine Temperatur des Wärmeträgermediums zu erfassen und ein entsprechend zur erfassten Temperatur korrelierendes Temperatursignal der Schnittstelle zur Verfügung zu stellen. Eine Heizleistung der Heizeinrichtung wird in Abhängigkeit des an der Schnittstelle bereitgestellten Steuersignals des Steuergeräts gesteuert.

Besonders vorteilhaft ist hierbei, wenn die Heizeinrichtung als Ölbrenner ausgebildet ist.

Ferner ist von Vorteil, wenn der Wärmespeicher als Trinkwasserspeicher ausgebildet ist und mit einer Entnahmestation fluidisch verbunden ist.

Nachfolgend wird die Erfindung anhand von Figuren näher erläutert. Dabei zeigen:
- Figur 1: eine schematische Darstellung eines Heizungssystems gemäß einer ersten Ausführungsform;
- Figur 2: ein Ablaufdiagramm eines Verfahrens zur Steuerung des in Figur 1 gezeigten Heizungssystems;
- Figur 3: ein Diagram einer Temperatur T_{V} eines Wärmeträgermediums aufgetragen über einer Zeit t;
- Figur 4: eine schematische Darstellung eines Heizungssystems gemäß einer zweiten Ausführungsform;
- Figur 5: ein Ablaufdiagramm eines Verfahrens zur Steuerung des in Figur 4 gezeigten Heizungssystems; und
- Figur 6: ein Diagram einer Temperatur T_{R} eines Wärmeträgermediums aufgetragen über einer Zeit t.

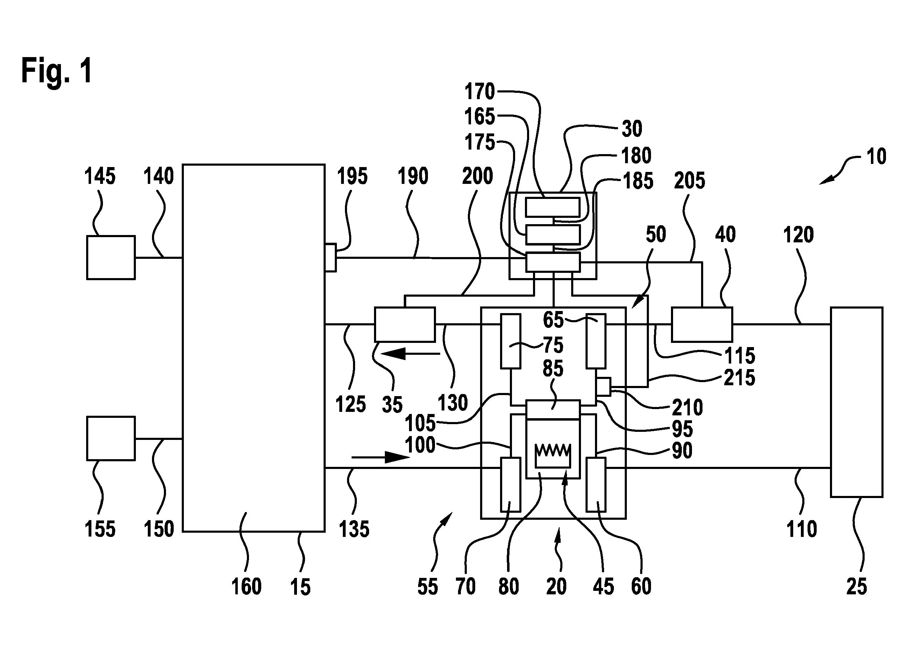

Figur 1 zeigt eine schematische Darstellung eines Heizungssystems 10 gemäß einer ersten Ausführungsform. Das Heizungssystem 10 umfasst einen Wärmespeicher 15, einen Wärmeerzeuger 20 sowie einen Heizkreislauf 25. Ferner ist ein Steuergerät 30 vorgesehen, das ausgebildet ist, das Heizungssystem 10 zu steuern. Ferner umfasst das Heizungssystem 10 eine Ladepumpe 35 sowie eine Heizungspumpe 40.

Der Wärmeerzeuger 20 weist eine Heizeinrichtung 45 sowie einen ersten Anschluss 50 und einen zweiten Anschluss 55 auf. Der erste Anschluss 50 weist einen ersten Eingang 60 und einen ersten Ausgang 65 auf. Der zweite Anschluss 55 weist einen zweiten Eingang 70 und einen zweiten Ausgang 75 auf.

Die Heizeinrichtung 45 weist einen Brenner 80 und einen am Brenner 80 angeordneten Wärmetauscher 85 auf. Der Wärmetauscher 85 wird primärseitig mit Wärme aus dem Brenner 80 beliefert. Sekundärseitig ist der Wärmetauscher 85 über eine erste Leitung 90 mit dem ersten Eingang 60 und über eine zweite Leitung 95 mit dem ersten Ausgang 65 verbunden. Über eine dritte Leitung 100 ist der Wärmetauscher 85 sekundärseitig mit dem zweiten Eingang 70 und über eine vierte Leitung 105 mit dem zweiten Ausgang 75 verbunden. Der Wärmetauscher 85 weist sekundärseitig ein vordefiniertes erstes Speichervolumen auf. Der Wärmespeicher 15 weist ein zweites Speichervolumen auf, das deutlich größer, vorzugsweise wenigstens zehnmal, insbesondere wenigstens 20 mal größer als das erste Speichervolumen ist.

Der Heizkreislauf 25 ist über eine fünfte Leitung 110 ausgangsseitig mit dem ersten Eingang 60 verbunden. Der erste Ausgang 65 ist über eine sechste Leitung 115 mit der Heizungspumpe 40 verbunden. Eine Ausgangsseite der Heizungspumpe 40 ist eingangsseitig mit dem Heizkreislauf 25 über eine siebte Leitung 120 verbunden.

Der Wärmespeicher 15 ist eingangsseitig über eine achte Leitung 125 mit der Ladepumpe 35 verbunden. Über eine neunte Leitung 130 ist die Ladepumpe 35 mit dem zweiten Ausgang 75 verbunden. Ferner ist ausgangsseitig der Wärmespeicher 15 über eine zehnte Leitung 135 mit dem zweiten Eingang 70 verbunden.

Der Wärmespeicher 15, der Wärmetauscher 85 sowie der Heizkreislauf 25 und die Leitungen 90 bis 135 sind mit einem Wärmeträgermedium 160, insbesondere mit Wasser, füllbar.

Ist der Wärmespeicher 15 als Trinkwasserspeicher ausgebildet, kann der Wärmespeicher 15 ausgangsseitig mittels einer elften Leitung 140 mit wenigstens einer Entnahmestation 145 und eingangsseitig über eine zwölfte Leitung 150 mit einem Frischwasserversorgungsnetz 155 verbunden. Des Weiteren umfasst in dieser Ausgestaltung der Wärmespeicher 15 einen weiteren nicht dargestellten Wärmetauscher, der mit der achten und zehnten Leitung 125, 135 primärseitig verbunden ist. Der weitere Wärmetauscher dient dazu, vorhandenes Trinkwasser vom Wärmeträgermedium 160 fluidisch zu trennen und einen Wärmeaustausch zwischen dem Trinkwasser und dem Wärmeträgermedium 160 zu ermöglichen.

Ist der Wärmespeicher 15 als reiner Speicher für das Wärmeträgermedium 160 ausgebildet, also ist im Wärmespeicher 15 kein Trinkwasser angeordnet, so kann auf den weiteren Wärmetauscher verzichtet und das Wärmeträgermedium 160 direkt aus dem Wärmespeicher 15 entnommen werden.

Das Steuergerät 30 weist eine Steuereinrichtung 165, einen Speicher 170, und eine Schnittstelle 175 auf. Der Speicher 170 ist über eine erste Verbindung 180 mit der Steuereinrichtung 165 verbunden. Die Steuereinrichtung 165 ist mit der Schnittstelle 175 über eine zweite Verbindung 185 verbunden. Die Schnittstelle 175 ist in der Ausführungsform als mechanische Anbindung ausgebildet. Selbstverständlich ist auch denkbar, dass die Schnittstelle 175 eine eigene Logik aufweist und kann beispielsweise als Analog-Digitalwandler ausgebildet sein.

Die Schnittstelle 175 ist über eine dritte Verbindung 190 mit einem ersten Temperatursensor 195 des Heizungssystems 10, der an dem Wärmespeicher 15 angeordnet ist, und über eine vierte Verbindung 200 mit der Ladepumpe 35 verbunden. Ferner ist die Schnittstelle 175 über eine fünfte Verbindung 205 mit der Heizungspumpe 40 und mit einem zweiten Temperatursensor 210 über eine sechste Verbindung 215 verbunden. Die Verbindungen 180, 185, 190, 200, 205, 215 dienen dazu, einen Signalaustausch zwischen den Temperatursensoren 195, 210 oder Pumpen 35, 40 bzw. Komponenten des Steuergeräts 30 zu ermöglichen. Die Verbindungen 180, 185, 190, 200, 205, 215 können auch als Bussystem ausgebildet sein. Selbstverständlich ist auch denkbar, dass die Verbindungen 180, 185, 190, 200, 205, 215 andersartig ausgebildet sind oder drahtlos oder drahtgestützt die einzelnen Komponenten des Steuergeräts 30 und/oder Sensoren 195, 210 und/oder Pumpen 35, 40 miteinander verbinden.

Der erste Temperatursensor 195 erfasst eine erste Temperatur des Wärmeträgermediums 160 im Wärmespeicher 15 und stellt ein entsprechend zur ersten Temperatur korrespondierendes erstes Temperatursignal über die dritte Verbindung 190 der Schnittstelle 175 zur Verfügung. Die Schnittstelle 175 erfasst das erste Temperatursignal und stellt das erste Temperatursignal über die zweite Verbindung 185 der Steuereinrichtung 165 zur Verfügung.

Der zweite Temperatursensor 210 ist zwischen dem ersten Anschluss 50 und der Heizeinrichtung 45 angeordnet und erfasst eine zweite Temperatur des Wärmeträgermediums 160 nach Verlassen des Wärmetauschers 85 hin zum ersten Ausgang 65. Der zweite Temperatursensor 210 gibt ein entsprechend zur erfassten zweiten Temperatur des Wärmeträgermediums 160 korrespondierendes zweites Temperatursignal aus, das über die sechste Verbindung 215 der Schnittstelle 175 zur Verfügung gestellt wird. Die Schnittstelle 175 erfasst das zweite Temperatursignal und stellt das zweite Temperatursignal der Steuereinrichtung 165 zur Verfügung.

In dem Speicher 170 ist in der Ausführungsform ein vordefinierter erster Parameter abgelegt. Der erste Parameter umfasst in der Ausführungsform einen ersten vordefinierten Schwellenwert und einen vordefinierten Kennwert. Selbstverständlich ist auch denkbar, dass der erste Parameter andersartig ausgebildet ist und beispielsweise eine mathematische Funktion, eine Kennlinie oder ein Kennfeld oder eine Kombination aus Genanntem aufweist. Ferner ist im Speicher 170 ist ein erstes vordefiniertes Zeitintervall t₁ zur Aktivierung der Ladepumpe 35 abgelegt. Ferner ist im Speicher 170 ein Volumenstrom V̇_{V} abgelegt.

Die Heizeinrichtung 45 dient dazu, das Wärmeträgermedium 160 mittels einer durch den Brenner 80 über den Wärmetauscher 85 zur Verfügung gestellten Wärme zu erwärmen. Dabei wird eine Wärmemenge mittels des Wärmeträgermediums 160 im Wärmespeicher 15 gespeichert. Die Ladepumpe 35 ist dabei ausgebildet, eine Zirkulation zwischen dem Wärmetauscher 85 und dem Wärmespeicher 15 zu erreichen, um bei Betrieb des Brenners 80 mittels der durch den Brenner 80 über den Wärmetauscher 85 zur Verfügung gestellten Wärme das im Wärmespeicher 15 vorhandene Wärmeträgermedium 160 und, falls der Wärmespeicher 15 als Trinkwasserspeicher ausgebildet ist, das Trinkwasser zu erwärmen.

Die Heizungspumpe 40 fördert aus dem Wärmetauscher 85 erwärmtes Wärmeträgermedium 160 in den Heizkreislauf 25. Der Heizkreislauf 25 ist ausgebildet, mittels weiterer nicht dargestellter, in Räumen eines Gebäudes angeordneter Wärmetauscher das erwärmte Wärmeträgermedium 160 durch die weiteren Wärmetauscher zu führen und dabei die Wärme aus dem Wärmeträgermedium 160 zur Erwärmung des Raums im Gebäude abzuführen.

Durch die Anordnung des zweiten Temperatursensors 210 zwischen dem ersten Anschluss 50 und der Heizeinrichtung 45 bzw. durch die Anordnung des zweiten Temperatursensors 210 zwischen dem Wärmetauscher 85 und dem ersten Ausgang 65 erfasst der zweite Temperatursensor 210 als zweite Temperatur eine Vorlauftemperatur des Wärmeträgermediums 160, das in den Heizkreislauf 25 mittels der Heizungspumpe 40 gefördert wird. Nach Durchfließen des Heizkreislaufs 25 ist das Wärmeträgermedium 160 abgekühlt und wird über den ersten Eingang 60 wieder in den Wärmetauscher 85 sekundärseitig gefördert. Im Wärmetauscher 85 wird das Wärmeträgermedium 160 durch mittels der durch den Brenner 80 über den Wärmetauscher 85 zur Verfügung gestellten Wärme erwärmt und verlässt abermalig erwärmt über den ersten Ausgang 65 den Wärmeerzeuger 20.

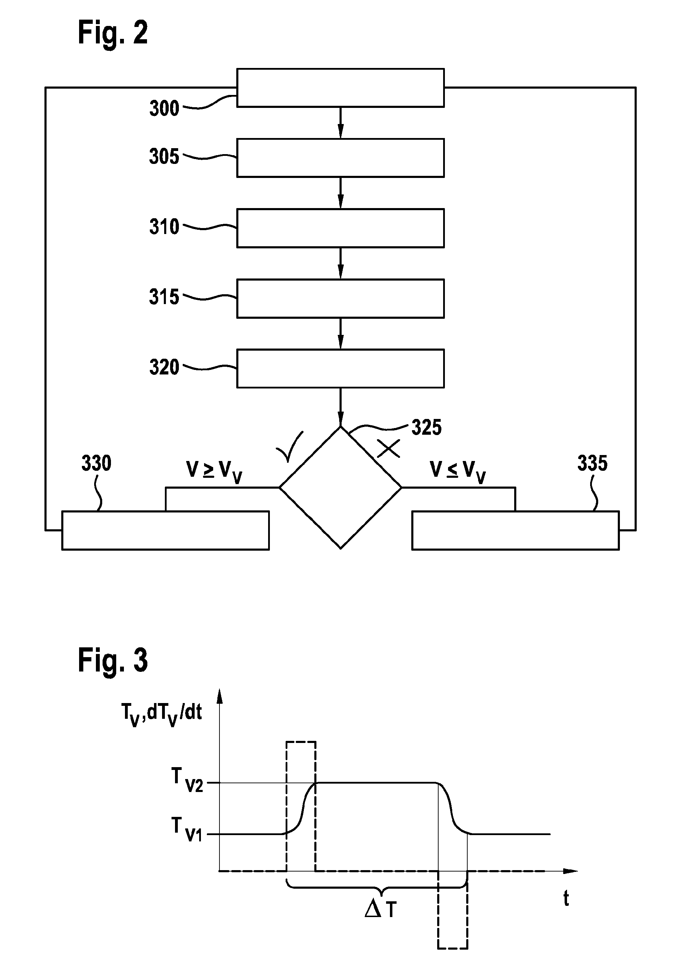

Figur 2 zeigt ein Ablaufdiagramm eines Verfahrens zur Steuerung des in Figur 1 gezeigten Heizungssystems 10. Figur 3 zeigt ein Diagram einer Temperatur T_{V} des Wärmeträgermediums 160, aufgetragen über einer Zeit t. Die Figuren 2 und 3 sollen nachfolgend gemeinsam erläutert werden. Dabei ist in Figur 2 mittels rautenförmig angeordneter Kästchen eine Bedingung symbolisiert. Mittels eines Häkchens wird die Erfüllung der Bedingung gekennzeichnet, während hingegen mittels eines Kreuzchens die Nichterfüllung der Bedingung in Figur 2 gekennzeichnet ist.

In einem ersten Verfahrensschritt 300 wird eine vordefinierte Wärmemenge aus dem Wärmespeicher 15 entnommen. Dazu aktiviert die Steuereinrichtung 165 mittels eines Steuersignals über die Schnittstelle 175 die Ladepumpe 35 für das erste Zeitintervall t₁. Bei konstanter Förderleistung fördert die Ladepumpe 35 über das erste Zeitintervall t₁ ein vordefiniertes Volumen und damit eine mit dem Volumen des Wärmeträgermediums korrelierende Wärmemenge mittels des Wärmeträgermediums 160 über die zehnte Leitung 135 aus dem Wärmespeicher 15 sekundärseitig in den Wärmetauscher 85.

Die vordefinierte Wärmemenge bzw. das von aus dem Wärmespeicher 15 geförderte Wärmeträgermedium 160 ist dabei vorteilhafterweise gleich oder geringer dem ersten Speichervolumen des Wärmetauschers 85.

In einem zweiten Verfahrensschritt 305 aktiviert die Steuereinrichtung 165 über die Schnittstelle 175 die Heizungspumpe 40 nach Deaktivierung der Ladepumpe 35 mittels eines weiteren Steuersignals.

Die Heizungspumpe 40 fördert in Abhängigkeit eines Strömungswiderstands des Heizkreislaufs 25 das Wärmeträgermedium 160 aus dem zweiten Wärmetauscher 85 über den ersten Ausgang 65 in den Heizkreislauf 25. Der Strömungswiderstand des Heizkreislaufs 25 ist dabei abhängig von einer Wärmeanforderung des Nutzers zur Entnahme von Wärme aus dem Heizkreislauf 25 zum Beheizen der Räume des Gebäudes. Dies kann beispielsweise durch eine Ventilstellung am jeweiligen Wärmetauscher 85 des Heizkreislaufs 25 gezeigt werden. Hat der Nutzer nur eine geringe Wärmeanforderung an den Heizkreislauf 25, so ist der Strömungswiderstand in einem ersten Fall durch die stark heruntergeregelten oder gar geschlossen Ventile hoch. Liegt eine hohe Wärmeanforderung des Nutzers für seine Räume zum Beheizen vor, so sind die Ventile der Wärmetauscher 85 des Heizkreislaufs 25 in einem zweiten Fall stärker geöffnet als im oben beschriebenen Fall, sodass der Strömungswiderstand im zweiten Fall geringer ist als im ersten Fall.

Wird das Wärmeträgermedium 160 durch die Heizungspumpe 40 durch den Heizkreislauf 25 gefördert, so strömt zuerst in der zweiten Leitung 95 befindliches abgekühltes Wärmeträgermedium 160 an dem zweiten Temperatursensor 210 vorbei. Auf Grund der Zirkulation des Wärmeträgermediums 160 im Heizkreislauf 25 und dem Wärmetauscher 85 wird das im Wärmespeicher 15 geförderte Wärmeträgermedium 160 dann aus dem Wärmetauscher 85 heraus gefördert und an dem zweiten Temperatursensor 210 vorbeigeführt. Das Wärmeträgermedium 160 weist dabei ein zweites Temperaturniveau T_{V2}. Das zweite Temperaturniveau T_{V2} ist dabei höher als das erste Temperaturniveau T_{V1}. Ist das erwärmte Wärmeträgermedium 160 in den Heizkreislauf 25 am zweiten Temperatursensor 210 vorbeigefördert, strömt wieder abgekühltes Wärmeträgermedium 160 mit dem ersten Temperaturniveau T_{V1} an dem zweiten Temperatursensor 210 vorbei.

Parallel zur Aktivierung der Heizungspumpe 40 wird am zweiten Temperatursensor 210 die zweite Temperatur T_{V} des aus dem Wärmetauscher 85 ausströmenden Wärmeträgermediums 160 über die Zeit t hinweg in einem dritten Verfahrensschritt 310 erfasst. Dabei stellt der zweite Temperatursensor 210 der Schnittstelle 175 ein von der zweiten Temperatur T_{V} abhängiges zweites Temperatursignal zur Verfügung, die das erfasste zweite Temperatursignal der Steuereinrichtung 165 bereitstellt. Die Steuereinrichtung 165 legt die erfasste zweite Temperatur in Abhängigkeit der Zeit t im Speicher 170 ab.

In einem vierten Verfahrensschritt 315 ermittelt die Steuereinrichtung 165 auf Grundlage der im Speicher 170 in Abhängigkeit der Zeit t abgelegten zweiten Temperaturen T_{V}(t) eine Temperaturänderung dT_{V}(t)/dt. Bezogen auf den in Figur 2 gezeigten Verlauf der zweiten Temperatur T_{V}(t) entspricht dabei die Temperaturänderung dT_{V}(t)/dt der Ableitung (strichliert in Figur 2 dargestellt) der zweiten Temperatur T_{V}(t) nach der Zeit t. Die Steuereinrichtung 165 legt die zu den jeweiligen im Speicher abgelegten zweiten Temperaturen T_{V}(t) in Abhängigkeit der Zeit t, die ermittelten Temperaturänderungen dT_{V}(t)/dt ab.

Strömt das erwärmte Wärmeträgermedium 160 am zweiten Temperatursensor 210 vorbei, bewirkt dies am zweiten Temperatursensor eine erste Temperaturänderung dT_{V}(t)/dt in Form eines Temperaturanstiegs vom ersten Temperaturniveau T_{V1} auf das zweite Temperaturniveau T_{V2}. Die hierbei auftretende erste Temperaturänderung dT_{V1}(t)/dt äußert sich dahingehend, dass die erste Temperaturänderung über die Zeit t nicht wie während des Vorbeiströmens des in der zweiten Leitung 95 vorhandenen Wärmeträgermediums 160 null sondern einen Wert aufweist, der größer null ist.

Nach dem Temperaturanstieg ist die zweite Leitung 95 auf das zweite Temperaturniveau T_{V2} erwärmt. Ferner strömt ausschließlich erwärmtes Wärmeträgermedium 160 an dem zweiten Temperatursensor 210 mit dem zweiten Temperaturniveau T_{V2} vorbei, so dass die Temperaturänderung dT_{V}(t)/dt im Wesentlichen wieder auf null abfällt.

Ist das aus dem Wärmespeicher 15 geförderte erwärmte Wärmeträgermedium 160 vollständig an dem zweiten Temperatursensor 210 vorbeigeströmt, so wird abgekühltes Wärmeträgermedium 160 aus dem Heizkreislauf 25 wieder in den Wärmetauscher 85 und von dort an dem zweiten Temperatursensor 210 vorbeigeführt, sodass am zweiten Temperatursensor 210 ein Temperaturabfall des Wärmeträgermediums vom zweiten Temperaturniveau T_{V2} wieder auf das erste Temperaturniveau T₁ gemessen wird. Der Temperaturabfall äußert sich in der Temperaturänderung dT_{V}(t)/dt dahingehend, dass diese einen Wert aufweist, der kleiner als Null ist.

In einem fünften Verfahrensschritt 320 ermittelt die Steuereinrichtung 165 auf Grundlage der ermittelten Temperaturänderung dT_{V}(t)/dt einen Volumenstrom V. Dabei korreliert der im Speicher 175 abgelegte erste Schwellenwert mit einer vordefinierten Temperaturänderung dT_{V}(t)/dt. Im Folgenden wird für den ersten Schwellenwert der Wert Null beispielhaft gewählt. Selbstverständlich sind auch andere Werte denkbar.

Die Steuereinrichtung 165 vergleicht die im Speicher abgelegten Temperaturänderungen dT_{V}(t)/dt mit dem ersten Schwellenwert. Überschreitet die Temperaturänderung dT_{V}(t)/dt den ersten Schwellenwert, erfasst die Steuereinrichtung 165 einen Beginn eines zweiten Zeitintervalls Δt. Mit Unterschreiten des ersten Schwellenwerts durch die Temperaturänderung dT_{V}(t)/dt erfasst die Steuereinrichtung ein Ende des zweiten Zeitintervalls Δt. Auf Grundlage der zu den Temperaturänderung dT_{V}(t)/dt zugeordneten Zeiten ermittelt die Steuereinrichtung durch Differenzbildung die zeitliche Dauer des zweiten Zeitintervalls Δt.

Der erste Parameter weist, wie oben erläutert, den Kennwert auf. Der Kennwert kann beispielsweise eine Querschnittsfläche der zweiten Leitung 95 sein. Mittels des Kennwerts und des zweiten Zeitintervalls Δt ermittelt die Steuereinrichtung 165 einen Volumenstrom V durch die zweite Leitung 115. Der Volumenstrom V korreliert dabei mit einer von dem Heizkreislauf 25 dem Wärmeerzeuger 20 abgenommene bzw. durch den Nutzer angeforderte und benötigte Heizleistung.

In einem sechsten Verfahrensschritt 325 vergleicht die Steuereinrichtung 165 den ermittelten Volumenstrom V mit dem vordefinierten Volumenstrom V_{V}. Der vordefinierte Volumenstrom V_{V} korreliert dabei mit einer minimalen Heizleistung des Wärmeerzeugers 20, bei dem der Wärmeerzeuger 20 im Wesentlichen fortwährend aktiviert ist.

Überschreitet der ermittelte Volumenstrom V den vordefinierten Volumenstrom V̇_{V}, so fährt die Steuereinrichtung 165 mit einem siebten Verfahrensschritt 330 fort. Unterschreitet der ermittelte Volumenstrom V den vordefinierten Volumenstrom V̇_{V}, wird mit einem achten Verfahrensschritt 330 fortgefahren.

Im siebten Verfahrensschritt steuert die Steuereinrichtung 165 die Heizleistung des Brenner 80 und die Heizungspumpe 40 in Abhängigkeit des ermittelten Volumenstroms V̇.

Dazu kann im Speicher 175 ein weiterer Parameter abgelegt sein, wobei auf Grundlage des weiteren Parameters und des Volumenstroms V die Steuereinrichtung 165 ein Steuersignal zur der Heizleistung des Brenners ermittelt und dann den Brenner 80 über die Schnittstelle 170 sendet. Dabei wird der Brenner 80 durch ein entsprechendes, über die Schnittstelle 170 zur Verfügung gestelltes Steuersignal gestartet und gesteuert. Die durch den Brenner 80 erzeugte Wärme wird über den Wärmetauscher 85 mittels der Heizungspumpe 40 und des Heizkreislaufs 25 im Gebäude zur Erwärmung von wenigstens einem Raum verteilt.

Im achten Verfahrensschritt 335 wird ein vordefiniertes drittes Zeitintervall t₃ abgewartet, bis mit dem ersten Verfahrensschritt 300 fortgefahren wird. Der Brenner 80 wird hierbei nicht gestartet. Dadurch kann vermieden werden, dass bei einer geringen Wärmeanforderung durch den Nutzer, die geringer ist als eine minimale Heizleistung des Wärmeerzeugers 20, der Brenner 80 unnötigerweise gestartet wird. Insbesondere bei der Ausgestaltung des Brenners 80 als Ölbrenner kann dadurch vermieden werden, dass elektrische Energie zum Starten des Ölbrenners, insbesondere zum Vorwärmen des Ölbrenners, unnötigerweise verbraucht wird. Dadurch kann insgesamt das Heizungssystem 10 besonders energieeffizient ausgebildet werden.

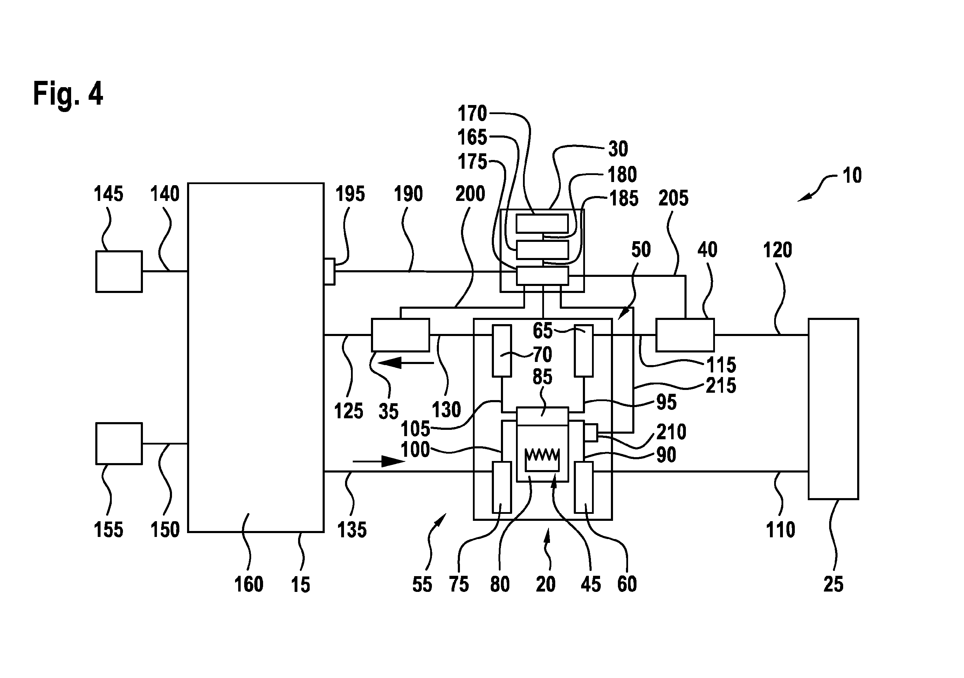

Figur 4 zeigt eine schematische Darstellung eines Heizungssystems 10 gemäß einer zweiten Ausführungsform. Das Heizungssystem 10 ist im Wesentlichen identisch zu dem in Figur 1 gezeigten Heizungssystem 10. Abweichend dazu ist der zweite Temperatursensor 210 am ersten Anschluss 50 zwischen dem ersten Eingang 60 und dem Wärmetauscher 85 angeordnet und erfasst als zweite Temperatur T_{R} eine Rücklauftemperatur des aus dem Heizkreislauf 25 rückströmenden Wärmeträgermediums 160.

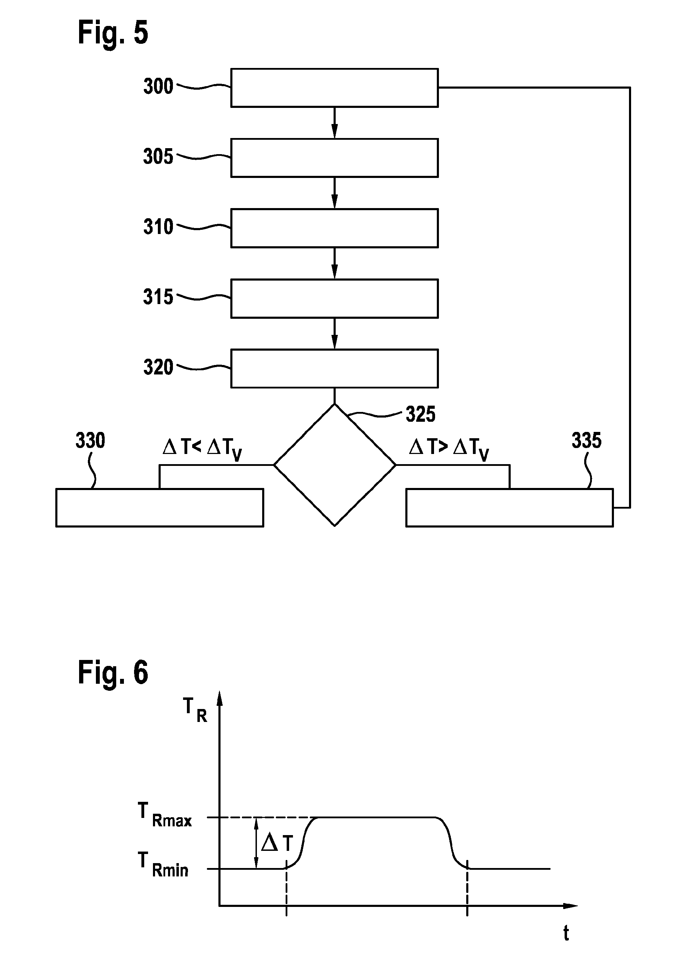

Figur 5 zeigt ein Ablaufdiagramm eines Verfahrens zur Steuerung des in Figur 4 gezeigten Heizungssystems 10. Figur 6 zeigt ein Diagramm der zweiten Temperatur T_{R} aufgetragen über der Zeit t.

Das Verfahren zum Betrieb des in Figur 4 gezeigten Heizungssystems 10 ist ähnlich zu dem in Figur 2 gezeigten Verfahren ausgebildet. Der Temperaturverlauf der zweiten Temperatur T_{R}(t), der in Figur 6 gezeigt ist, ist ähnlich zu dem in Figur 3 gezeigten Temperaturverlauf der zweiten Temperatur Tv(t).

Die ersten vier Verfahrensschritte 300, 305, 310, 315 sind identisch zu dem in Figur 2 gezeigten Verfahren. Ferner ist anstelle des ersten Parameters ein zweiter Parameter, der einen zweiten Schwellenwert aufweist, im Speicher 170 abgelegt. Der zweite Schwellenwert korreliert dabei mit einer vordefinierten Temperaturdifferenz ΔT_{R}. Die vordefinierte Temperaturdifferenz ΔT_{R} korreliert dabei mit einer durch den Wärmeerzeuger 20 minimal in kontinuierlichem Betrieb bereitstellbaren Heizleistung.

Im fünften Verfahrensschritt 320 wird anstatt eines Volumenstroms V eine Temperaturdifferenz ΔT ermittelt. Dazu ermittelt die Steuereinrichtung 165 im fünften Verfahrensschritt 320 auf Grundlage der aufgezeichneten zweiten Temperatur T_{R} eine Minimaltemperatur T_{Rmin} und eine Maximaltemperatur T_{Rmax} durch einen Vergleich der aufgezeichneten zweiten Temperaturen T_{R}(t). Die Steuereinrichtung 165 ermittelt die Temperaturdifferenz ΔT durch Differenzbildung aus der Minimaltemperatur T_{Rmin} und T_{Rmax}.

In einem sechsten Verfahrenschritt 325 vergleicht die Steuereinrichtung 165 die ermittelte Temperaturdifferenz ΔT mit dem im Speicher 170 abgelegten zweiten Schwellenwert.

Unterschreitet die ermittelte Temperaturdifferenz ΔT die vordefinierte Temperaturdifferenz ΔT_{R}, wird mit dem siebten Verfahrensschritt 330 fortgefahren und der Wärmeerzeuger 20 gestartet, um das Wärmeträgermedium 160 für den Heizkreislauf 25 zu erwärmen, da bei einer geringen Temperaturdifferenz ΔT im Heizkreislauf 25 eine große Wärmemenge aus dem Wärmeträgermedium 160, das durch den Heizkreislauf 25 geströmt ist, entnommen wird.

Zur Steuerung des Brenners 80 kann dabei im Speicher 175 ein weiterer Parameter abgelegt sein, wobei auf Grundlage des weiteren Parameters und der Temperaturdifferenz ΔT die Steuereinrichtung 165 ein Steuersignal zur der Heizleistung ermittelt und dann den Brenner 80 über die Schnittstelle 170 sendet.

Überschreitet die ermittelte Temperaturdifferenz ΔT die vordefinierte Temperaturdifferenz ΔT_{R} des zweiten Schwellenwerts, wird mit einem achten Verfahrensschritt 335 fortgefahren. Dabei kann beim Überschreiten der ermittelten Temperaturdifferenz ΔT durch die vordefinierte Temperaturdifferenz ΔT_{R} davon ausgegangen werden, dass die vom Heizkreislauf 25 benötigte bzw. abgenommene Heizleistung geringer als eine minimale Heizleistung des Wärmeerzeugers 20 ist, da bei einer hohen Temperaturdifferenz ΔT nur wenig Wärme aus dem durch den Heizkreislauf 25 gepumpten Wärmeträgermedium 160 entnommen wird.

Im achten Verfahrensschritt 335 wird ein vordefiniertes viertes Zeitintervall t_{V} abgewartet, bis mit dem ersten Verfahrensschritt 300 wieder fortgefahren wird, so dass nach Fortsetzung des Verfahrens mit dem ersten Verfahrensschritt die Ladepumpe 35 in zeitlich regelmäßigem Abstand t_{V} aktiviert wird.

Dies hat zur Folge, dass bei Unterschreiten der vordefinierten Temperaturdifferenz ΔT_{R} der Brenner 80 kontinuierlich betrieben wird und ein Start-Stopp-Betrieb des Brenners 80 vermieden wird. Dadurch kann ein Strombedarf des Wärmeerzeugers 20 insbesondere zur Durchführung der Startphase reduziert werden. Somit kann insgesamt ein besonders energiesparsamer Wärmeerzeuger 20 bzw. energiesparsames Heizungssystem 10 bereitgestellt werden.

Es wird darauf hingewiesen, dass die in Figuren 1 bis 6 gezeigten Merkmale selbstverständlich miteinander kombiniert werden können. Selbstverständlich ist auch denkbar, dass die beschriebenen Verfahrensschritte 300 bis 335 parallel oder in einer anderen Reihenfolge durchgeführt werden. Insbesondere ist auch denkbar, dass die beiden beschriebenen Verfahren miteinander kombiniert werden. Auch ist denkbar, dass in regelmäßigen Abständen der Brenner 80 gestartet wird, um das im Wärmespeicher 15 angeordnete Wärmeträgermedium 160 wieder zu erwärmen.

Ferner ist auch denkbar, dass auf das Abwarten im achten Verfahrensschritt 335 des vierten Zeitintervalls t_{V} verzichtet wird und kontinuierlich eine vordefinierte Wärmemenge aus dem Wärmespeicher 15 in den Wärmetauscher 85 und vom Wärmetauscher 85 in den Heizkreislauf 25 gefördert wird.

Ferner ist auch denkbar, dass die oben erwähnten Parameter andersartig ausgebildet sind und beispielsweise wenigstens eine Kennlinie, eine mathematische Funktion, einen Schwellenwert oder eine Kombination aus genanntem aufweisen.

## Patentansprüche

1. Verfahren zum Betrieb eines Steuergeräts (30) und zur Steuerung eines Heizungssystems (10),
- wobei eine vordefinierte Wärmemenge mittels eines Wärmeträgermediums (160) aus einem Wärmespeicher (15) entnommen und in einen Heizkreislauf (25) des Heizungssystems (10) gefördert wird,
- wobei eine Temperatur (T_{R}, T_{V}) des in den Heizkreislauf (25) geförderten Wärmeträgermediums (160) über eine Zeit (t) erfasst wird,
- wobei eine benötigte Heizleistung des Heizungssystems (10) in Abhängigkeit der Temperatur (T_{R}, T_{V}) ermittelt wird,
- wobei ein Wärmeerzeuger (20) in Abhängigkeit der ermittelten Heizleistung gesteuert wird.

2. Verfahren nach Anspruch 1,
- wobei aus der erfassten Temperatur (T_{V}) eine Temperaturänderung des Wärmeträgermediums (160) über die Zeit (t) ermittelt wird,
- wobei auf Grundlage der Temperaturänderung des Wärmeträgermediums (160) und eines vordefinierten ersten Parameters ein Volumenstrom des Wärmeträgermediums (160) aus dem Wärmeerzeuger (20) in den Heizkreislauf (25) ermittelt wird,
- wobei der ermittelte Volumenstrom mit einem vordefinierten Volumenstrom (V̇) in einem Vergleich verglichen wird,
- wobei das Ergebnis des Vergleichs bei der Ermittlung der Heizleistung berücksichtigt wird.

3. Verfahren nach Anspruch 2,
- wobei der erste Parameter einen ersten vordefinierten Schwellenwert und einen vordefinierten Kennwert aufweist,
- wobei die Temperaturänderung mit dem ersten Schwellenwert verglichen wird,
- wobei bei Überschreiten des ersten Schwellenwerts durch die Temperaturänderung ein Beginn eines Zeitintervalls (Δt) erfasst wird,
- wobei nach dem Überschreiten des ersten Schwellenwerts durch die Temperaturänderung, durch ein Unterschreiten des ersten Schwellenwerts ein Ende des Zeitintervalls (Δt) ermittelt wird,
- wobei in Abhängigkeit des Kennwerts und des Zeitintervalls (Δt) der Volumenstrom(V) ermittelt wird.

4. Verfahren nach einem der Ansprüche 1 bis 3, wobei zur Förderung des Wärmeträgermediums (160) mittels einer Ladepumpe (35) aus dem Wärmespeicher (15) in den Wärmeerzeuger (20) die Ladepumpe (35) in Abhängigkeit der vordefinierten Wärmemenge zeitlich begrenzt (t₁) und vorzugsweise in zeitlich regelmäßigem Abstand (t_{V}) aktiviert wird.

5. Verfahren nach einem der Ansprüche 1 bis 4,
- wobei das Wärmeträgermedium (160) aus dem Wärmeerzeuger (20) in den Heizkreislauf (25) gefördert wird,
- wobei die Temperatur (T_{V}) des aus dem Wärmeerzeuger (20) in den Heizkreislauf (25) geförderten Wärmeträgermediums (160) erfasst wird
- und/oder
- wobei das Wärmeträgermedium (160) aus dem Heizkreislauf (25) in den Wärmeerzeuger (20) gefördert wird,
- wobei die Temperatur (T_{R}) des aus dem Heizkreislauf (25) in den Wärmeerzeuger (20) geförderten Wärmeträgermediums (160) erfasst wird.

6. Verfahren nach einem der Ansprüche 1 bis 5,
- wobei eine Minimaltemperatur (T_{Rmin}) und eine Maximaltemperatur (T_{Rmax}) des aus dem Heizkreislauf (25) in den Wärmeerzeuger (20) geförderten Wärmeträgermediums (160) ermittelt wird,
- wobei aus der Minimaltemperatur (T_{Rmin}) und der Maximaltemperatur (T_{Rmax}) eine Temperaturdifferenz (ΔT) ermittelt wird,
- wobei auf Grundlage der Temperaturdifferenz (ΔT) und eines zweiten Parameters die Heizleistung ermittelt wird.

7. Verfahren nach Anspruch 6,
- wobei der zweite Parameter einen zweiten Schwellenwert aufweist,
- wobei die Temperaturdifferenz (ΔT) mit dem zweiten Schwellenwert in einem weiteren Vergleich verglichen wird,
- wobei der Wärmeerzeuger (20) in Abhängigkeit des Ergebnisses des weiteren Vergleichs gesteuert wird.

8. Steuergerät (30) für einen Heizungssystem (10), zur Durchführung eines Verfahrens nach einem der Ansprüche 1 bis 7,
- aufweisend eine Schnittstelle (175) und eine Steuereinrichtung (165),
- wobei die Schnittstelle (175) mit der Steuereinrichtung (165) verbunden sind,
- wobei die Schnittstelle (175) mit wenigstens einem Temperatursensor (210) und einem Wärmeerzeuger (20) verbindbar ist,
- wobei die Schnittstelle (175) ausgebildet ist, ein mit einer Temperatur eines Wärmeträgermediums (160) für einen Heizkreislauf (25) korrelierendes Temperatursignal des Temperatursensors (210) zu erfassen und der Steuereinrichtung (165) zur Verfügung zu stellen,
- wobei die Steuereinrichtung (165) ausgebildet ist, ein Steuersignal zur Steuerung einer Heizleistung des Wärmeerzeugers (20) an der Schnittstelle (175) auf Grundlage der ermittelten Temperatur (T_{R}, T_{V}) zur Verfügung zu stellen.

9. Heizungssystem (10) zur Erwärmung wenigstens eines Raums eines Gebäudes,
- aufweisend einen Wärmeerzeuger (20) und ein Steuergerät (30) nach Anspruch 8,
- wobei der Wärmeerzeuger (20)
- einen Anschluss (50) zur fluidischen Verbindung des Wärmeerzeugers (20) mit einem Heizkreislauf (25),
- eine Heizeinrichtung (45) aufweist,
- und einen Temperatursensor (210) aufweist,
- wobei die Heizeinrichtung (45) mit dem Anschluss (50) fluidisch verbunden ist,
- wobei der Wärmeerzeuger (20) zumindest teilweise mit einem Wärmeträgermedium (160) füllbar ist,
- wobei der Temperatursensor (210) und die Heizeinrichtung (45) mit der Schnittstelle (175) des Steuergeräts (30) verbunden sind,
- wobei der Temperatursensor (210) zwischen dem Anschluss (50) und der Heizeinrichtung (45) angeordnet und ausgebildet ist, eine Temperatur des Wärmeträgermediums (160) zu erfassen und ein zur erfassten Temperatur korrelierendes Temperatursignal der Schnittstelle (175) zur Verfügung zu stellen,
- wobei eine Heizleistung der Heizeinrichtung (45) in Abhängigkeit des an der Schnittstelle (175) bereitgestellten Steuersignals des Steuergeräts (30) gesteuert wird.

10. Heizungssystem (10) nach Anspruch 9, wobei die Heizeinrichtung (45) als Ölbrenner ausgebildet ist.

11. Heizungssystem (10) nach Anspruch 9 oder 10, wobei der Wärmespeicher (15) als Trinkwasserspeicher ausgebildet ist, und mit zumindest einer Entnahmestation (145) fluidisch verbunden ist.
